# EUROPÄISCHE PATENTSCHRIFT

(11) **EP 3 079 887 B1**
(45) Veröffentlichungstag und Bekanntmachung des Hinweises auf die Patenterteilung: **01.01.2025**
(21) Anmeldenummer: 14795837.5
(22) Anmeldetag: 11.11.2014
(51) Int. Cl.: B29C 71/04, G21K 5/08, B65D 5/50, B29C 35/08, A61L 2/00

(54) **VERFAHREN ZUR STRAHLENVERNETZUNG VON AUS KUNSTSTOFF-MATERIAL HERGESTELLTEN ELEMENTEN UND VERPACKUNGSEINHEIT HIERFÜR**
PROCESS FOR IRRADIATION CROSS-LINKING OF ELEMENTS MADE OF PLASTIC MATERIAL AND PACKING UNIT THEREFOR
PROCEDE DE RETICULATION PAR RAYONNEMENT D'ÉLÉMENTS EN MATIÈRE PLASTIQUE ET UNITÉ D'EMBALLAGE ASSOCIÉ

(30) Priorität: 10.12.2013 DE 102013113781
(43) Veröffentlichungstag der Anmeldung: 19.10.2016
(73) Patentinhaber: Aesculap AG, 78532 Tuttlingen (DE)
(72) Erfinder: STRELLER, Rouven, 79856 Hinterzarten (DE); REU, Gerhard, 78532 Tuttlingen (DE)
(74) Vertreter: Hoeger, Stellrecht & Partner Patentanwälte mbB
(86) Internationale Anmeldenummer: PCT/EP2014/074248
(87) Internationale Veröffentlichungsnummer: WO 2015/086238

(56) Entgegenhaltungen:
- EP-A2- 0 374 590
- EP-A2- 1 454 729
- US-A1- 2011 296 800
- US-B1- 6 355 215

## Beschreibung

Die Erfindung betrifft ein Verfahren zur Vernetzung von Elementen aus einem Kunststoff-Material mittels hoch-energetischer Strahlung, insbesondere β- oder γ-Strahlung, sowie eine Verpackungseinheit zur Handhabung der Elemente in einem solchen Verfahren.

Kunststoff-Materialien, insbesondere auch UHMWPE (ultra high molecular weight polyethylene), werden z.B. für die Herstellung von medizinischen Implantaten, chirurgischen Instrumenten oder Instrumententeilen verwendet, wobei die Elemente aus diesem Material zur Erhöhung der Verschleißbeständigkeit mittels hoch-energetischer Strahlung, insbesondere β-Strahlung oder γ-Strahlung, sterilisiert und vernetzt werden. Hierbei ist es von Vorteil, wenn die Vernetzung bei einer erhöhten Temperatur durchgeführt wird. Der Temperaturerhöhung sind allerdings durch Materialeigenschaften des Kunststoff-Materials, in einigen Fällen durch die Schmelztemperatur oder den Schmelztemperaturbereich des Kunststoff-Materials, Grenzen gesetzt.

Nachdem eine Erwärmung der Elemente in einer Bestrahlungsvorrichtung aufwändig ist oder sich überhaupt verbietet, wurde schon vorgeschlagen, die Elemente vor der Bestrahlung auf eine höhere Temperatur zu bringen.

Im Hinblick auf die Materialeigenschaften, beispielsweise die Schmelztemperatur bzw. den Schmelztemperaturbereich, kann die Erwärmung vor der Bestrahlung, wie erwähnt, nicht beliebig hoch gewählt werden, so dass es Schwierigkeiten bereitet, die Elemente noch beim Bestrahlungsvorgang, je nach der erforderlichen Verweildauer in der Bestrahlungsvorrichtung, mit einer ausreichend hohen Temperatur bereitzustellen.

Es wurde versucht, Implantat-Rohlinge aus UHMWPE (unterer Grenzwert des Schmelztemperaturbereichs ca. 125 °C) in Vorrichtungen aus Aluminium, sogenannten Aluminium-Trays, bereitzuhalten und auf ca. 115 °C vorzuwärmen, wobei jedoch bei den üblichen Prozessschritten bis zur Bestrahlung nicht sichergestellt werden kann, dass die Elemente noch eine Temperatur von ca. 100 °C aufweisen. Der zeitliche Abstand zwischen der Erwärmung der Elemente im Ofen und der Einführung derselben in die Bestrahlungsvorrichtung beträgt häufig ca. 20 bis ca. 30 min.

Es wurde deshalb darüber hinaus versucht, die Elemente in den Aluminium-Trays thermisch zu isolieren, was jedoch nur zu einer unbefriedigenden Verbesserung führt.

Darüber hinaus ist die Handhabung der Elemente in den Aluminium-Trays mit einem hohen Aufwand verbunden, da diese nicht nur ein erhebliches Gewicht aufweisen, sondern darüber hinaus die Elemente auch mehrfach umgeladen werden müssen, was höhere Personalkosten bedeutet.

Durch das mehrfache Umladen der Elemente wird zusätzlich die Rückverfolgbarkeit der Produkte gefährdet. Darüber hinaus ist bei den Aluminium-Trays die Beladungsmenge durch die Anzahl der möglichen Aufnahmestellen begrenzt.

Einen ähnlichen Ansatz verfolgt auch das U.S.-Patent US 6,355,215 B1, welches ein Verfahren nach dem Oberbegriff des Anspruchs 1 und eine Verpackungseinheit nach dem Oberbegriff des Anspruchs 9 offenbart. Die Implantate oder Implantat-Rohlinge werden zunächst in einer Atmosphäre mit vermindertem Sauerstoffgehalt in einer Sauerstoff-dichten Verpackung versiegelt. Für einen Sterilisier- und Vernetzungsschritt werden die so verpackten Implantate oder Implantat-Rohlinge lose in einem Aluminium-Behälter platziert, der wiederum in einen Wärme isolierenden Außenbehälter eingelagert wird.

Die EP 0 374 590 A2 offenbart ein Verfahren zur Sterilisation von intraokularen Linsen.

Die EP 1 454 729 A2 offenbart einen Prüfkörper für ein Polymerisationsgerät, insbesondere für den Dentalbereich.

Die US 2011/296000 A1 offenbart ein Verpackungssystem zur Aufbewahrung von Antriebsvorrichtungen.

Aufgabe der vorliegenden Erfindung ist es, ein Verfahren vorzuschlagen, mit dem die Strahlenvernetzung vom Betriebsablauf her einfacher und kostengünstiger durchgeführt werden kann.

Diese Aufgabe wird durch ein Verfahren gemäß Anspruch 1 gelöst.

Die mit dem erfindungsgemäßen Verfahren zu behandelnden strahlenvernetzbaren Elemente sind ausgewählt aus Implantaten, Implantat-Rohlingen, chirurgischen Instrumenten und Instrumententeilen.

Aufgrund der Anordnung der Elemente in der Verpackungseinheit kann sichergestellt werden, dass die Elemente eine für die Strahlenvernetzung ausreichende Temperatur aufweisen, ohne dass hierfür zusätzliche Maßnahmen erforderlich sind. Darüber hinaus lässt sich die Aufnahme aus kostengünstigen Materialien fertigen, die zudem leichter sind als das bislang für die Trays verwendete Aluminium.

Erfindungsgemäß wird für die Vernetzung der Kunststoff-Materialien der Elemente energiereiche Strahlung eingesetzt, insbesondere in Form von β-Strahlung und γ-Strahlung oder auch Röntgenstrahlung.

Die Elemente können in einer Schutzatmosphäre strahlenvernetzt werden. Überraschend hat sich jedoch gezeigt, dass vielfach die Kunststoff-Materialien der Elemente auch in normaler sauerstoffhaltiger Atmosphäre vernetzt werden können, insbesondere dann, wenn die Kunststoff-Materialien Antioxidantien wie z.B. Vitamin E, insbesondere α-Tocopherol, enthalten.

Vorzugsweise ist die Aufnahme gemäß einer Variante der Erfindung bereits als Halterung für die Elemente ausgebildet.

Die vorliegende Erfindung schlägt gemäß einer weiteren Variante vor, mehrere Elemente vorzugsweise in einer gemeinsamen Halterung anzuordnen, in der sie insbesondere vom Zeitpunkt der Herstellung der Elemente bis zur Beendigung der Strahlenvernetzung und gegebenenfalls darüber hinaus verbleiben können, unabhängig davon, welche Handhabungs- und Transportprozesse dabei notwendig werden.

Vor dem Erwärmen auf eine Temperatur, die der Vernetzungstemperatur entspricht oder höher liegt, wird die Halterung mit den Elementen in der Aufnahme platziert, die aus einem Wärme schlecht leitenden Material hergestellt ist. Dabei wird wiederum eine Verpackungseinheit gebildet, welche nicht nur die Handhabung der Elemente vereinfacht, sondern des Weiteren die Elemente gegenüber der Umgebung zumindest partiell thermisch isoliert, so dass die Elemente auch bei einem zeitlichen Abstand zwischen dem Erwärmen und dem Bestrahlen noch eine ausreichend hohe Temperatur während der Strahlenvernetzung aufweisen.

Bei dem erfindungsgemäßen Verfahren können neben Elementen aus UHMWPE Elemente aus einer Vielzahl anderer Kunststoff-Materialien strahlenvernetzt werden. Beispielhaft darf auf die in der Publikation von J. Gehring et al. "Radiation crosslinking of polymers - status, current issues, trends and challenges" in Radiat. Phys. Chem., 1995, Vol. 46, No. 4, Seiten 931 bis 936, erwähnten Kunststoffmaterialien verwiesen werden.

Besonders bevorzugt sind neben dem UHMWPE allgemein thermoplastische Kunststoffe, insbesondere Polyethylen (PE), Polypropylen (PP), Polyvinylchlorid (PVC), Polyamid (PA) und Polybutylenterephthalat (PBT), sowie thermoplastische Elastomere, insbesondere Polyethylen-propylen-dien (EPDM).

Besonders geeignete Temperaturen für eine Vernetzung von UHMWPE mittels β-Strahlung betragen erfindungsgemäß ca. 100 °C oder mehr.

Vorzugsweise wird nicht nur die Aufnahme, sondern auch die Halterung aus einem die Wärme schlecht leitenden Material hergestellt.

Weiter bevorzugt sind alle Bestandteile, die neben den zu vernetzenden Elementen aus Kunststoff-Material die Verpackungseinheit bilden, aus Wärme isolierendem Material hergestellt.

Unter einem Wärme schlecht leitenden und damit Wärme isolierenden Material werden solche Materialien verstanden, deren Wärmeleitfähigkeit ca.

5 W/(m·K) oder weniger, insbesondere ca. 1 W/(m·K) oder weniger, beträgt.

Bevorzugt werden die Elemente derart in der Aufnahme platziert und diese so dimensioniert, dass die Elemente mindestens bodenseitig und seitlich im Wesentlichen vollständig von der Verpackungseinheit umgeben sind.

Des Weiteren kann vorteilhafterweise die Verpackungseinheit vor dem Einführen in die Bestrahlungsvorrichtung, insbesondere unmittelbar nach oder weiter bevorzugt bereits vor dem Erwärmen auf die Bestrahlungstemperatur, mit einem Deckel verschlossen werden. Damit wird eine weiter verbesserte Temperaturkonstanz der Elemente zwischen dem Schritt des Erwärmens und der nachfolgenden Bestrahlung erzielt. Auch der Deckel wird vorzugsweise aus einem Wärme schlecht leitenden Material hergestellt. Damit lässt sich eine allseitige Wärmeisolierung erzielen.

Bevorzugt sind die Materialien, aus denen die Verpackungseinheit gebildet ist, durchlässig für die zur Vernetzung eingesetzte Strahlung, so dass häufig keine gesonderten Maßnahmen zur Orientierung der Verpackungseinheit innerhalb der Bestrahlungsvorrichtung getroffen werden müssen.

Als Materialien zur Bildung der Komponenten der Verpackungseinheit können allerdings auch Materialien verwendet werden, die erhebliche Anteile der verwendeten Strahlung absorbieren. Jedoch ist es dann typischerweise notwendig, dass die Verpackungseinheit mit den Elementen ohne Deckel und gegebenenfalls auf die Strahlungsquelle der Bestrahlungsvorrichtung ausgerichtet in die Bestrahlungsvorrichtung eingeführt wird.

Materialien zur Herstellung der Komponenten der Verpackungseinheit werden wie zuvor angesprochen vorzugsweise aus Wärme-isolierenden Materialien ausgewählt, wobei hier beispielsweise Kartonage, insbesondere auch Wellpappe, mit einer Wärmeleitfähigkeit von ca. 0,15 W/(m·K) oder weniger, bevorzugt 0,1 W/(m·K) oder weniger, weiter bevorzugt 0,09 W/(m·K) oder weniger, als Rohstoff sehr gut geeignet ist. Diese Materialien sind auch ausreichend strahlendurchlässig, so dass auch bei mit einem Deckel verschlossenen Verpackungseinheiten der Bestrahlungsvorgang zur Vernetzung des Kunststoff-Materials durchgeführt werden kann.

Bevorzugt geschieht die Erwärmung der für die Strahlenvernetzung vorgesehenen Elemente aus Kunststoff-Material unter der Vorgabe, dass eine Maßhaltigkeit von ca. 2 %, weiter bevorzugt ca. 1 %, gewährleistet ist.

Unter einer Maßhaltigkeit wird im Sinne der vorliegenden Erfindung verstanden, dass sich das Maß der Elemente in Richtung ihrer größten räumlichen Ausdehnung vor dem Erwärmen aufgrund der Wärmebehandlung, der Strahlenvernetzung und des anschließenden Abkühlens nach der Vernetzung auf die Ausgangstemperatur, insbesondere Raumtemperatur, z.B. 25 °C, nur um den angegebenen Prozentsatz oder weniger ändert.

Besonders bevorzugt ist bei dem erfindungsgemäßen Verfahren eine Maßhaltigkeit von ca. 2 %, weiter bevorzugt ca. 1 %, bei den Elementen in mehr als einer Raumrichtung, insbesondere in jeder Raumrichtung, gegeben.

Bei dem erfindungsgemäßen Verfahren werden die Elemente vorzugsweise auf eine Temperatur von ca. 60 °C bis ca. 160 °C, weiter bevorzugt von ca. 90 °C bis ca. 120 °C, erwärmt, eine Temperatur, die bei einer β-Bestrahlung in der Regel ausreicht, um auch einen längeren Zeitraum zwischen dem Erwärmen einerseits und dem Bestrahlen andererseits zu überbrücken, ohne dass die Elemente eine für eine zufriedenstellende Strahlenvernetzung zu geringe Temperatur aufweisen.

Der genannte Temperaturbereich kann für Elemente aus UHMWPE-Material bis ca. 120 °C ausgeschöpft werden. Kommt γ-Strahlung zum Einsatz, empfiehlt sich bei UHMWPE-Material eine Temperatur von ca. 100 °C bis ca. 125 °C.

Vorzugsweise wird jedoch die Verpackungseinheit innerhalb von ca. 10 min. oder weniger, insbesondere 5 min. oder weniger, nach Beendigung des Erwärmens auf die Vernetzungstemperatur in die Bestrahlungsvorrichtung eingeführt.

Des Weiteren ist es bevorzugt, wenn die Verpackungseinheit in die Bestrahlungsvorrichtung eingeführt wird, solange die Elemente noch eine Vernetzungstemperatur von ca. 60 °C bis ca. 160 °C, weiter bevorzugt von ca. 90 °C bis ca. 120 °C, aufweisen.

Die vorgenannten Temperaturen liegen bevorzugt jeweils unterhalb der Schmelztemperatur bzw. dem unteren Grenzwert des Schmelztemperaturbereichs des jeweiligen Kunststoffmaterials. Bevorzugt beträgt der Abstand der genannten Temperaturen zur Schmelztemperatur bzw. zum unteren Grenzwert des Schmelztemperaturbereichs des Kunststoff-Materials ca. 10 °C bis ca. 15 °C.

Bei der Verwendung von γ-Strahlung kann näher am unteren Grenzwert der Schmelztemperaturbereiche bzw. der Schmelztemperatur gearbeitet werden als bei der Verwendung von β-Strahlung, da der Energieeintrag in das Kunststoffmaterial und dessen darauf basierende Erwärmung geringer als bei der β-Bestrahlung ausfällt.

Die Erfindung betrifft auch eine Verpackungseinheit gemäß Anspruch 9 mit einem oder mehreren Elementen aus einem strahlungsvernetzbaren Kunststoff-Material, die ausgewählt sind aus Implantaten, Implantat-Rohlingen, chirurgischen Instrumenten und deren Teilen, die in dem erfindungsgemäßen Verfahren von besonderer Bedeutung für die Aufnahme und Handhabung der Elemente ist.

Die Verpackungseinheit beinhaltet bevorzugt eine Halterung mit einer Mehrzahl an Elementen. Hierbei umfasst die Aufnahme eine Bodenfläche und einen die Bodenfläche begrenzenden Rahmen und definiert eine Ausnehmung, die die Halterung aufnehmen kann.

Alternativ kann die Aufnahme selbst die Halterung bilden.

Die Aufnahme und/oder die Halterung wie auch die Verpackungseinheit insgesamt bieten für die Elemente einen Schutz vor Verschmutzung, Beschädigung oder sonstigen ungünstigen Einflüssen.

Da die Aufnahme aus einem Wärme schlecht leitenden Material hergestellt ist, vereinfacht sich die Handhabung der Elemente insbesondere beim oder nach dem Erwärmen bis zum Einführen in die Bestrahlungsvorrichtung.

Die separate Halterung für die Elemente kann dabei sehr einfach und damit Platz sparend ausgebildet werden. Sie nimmt die Elemente bevorzugt bereits direkt nach deren Fertigung für die weitere Handhabung und deren Transport auf.

Bevorzugt weist die Halterung selbst bereits eine Grundfläche auf, welche von einem Rand umgeben ist, der eine Stellfläche für die Elemente innerhalb der Halterung begrenzt.

Dies erleichtert die Handhabung der Elemente während der Fertigung, deren Transport zum Ort der Vernetzung der Kunststoff-Materialien durch energiereiche Bestrahlung und insbesondere auch während des Erwärmens und des Bestrahlens selbst.

Vorzugsweise weist die Halterung einen Rand und/oder die Aufnahme einen Rahmen mit einer Höhe auf, die im Wesentlichen der Höhe der Elemente entspricht. Damit ist gewährleistet, dass die Elemente bereits von drei Seiten her im Wesentlichen vollständig von dem Material der Verpackungseinheit umgeben sind.

Alternativ oder ergänzend kann die Halterung ein im Wesentlichen zur Bodenfläche paralleles Flächenelement oder Zwischenboden umfassen, in dem eine Vielzahl von Durchgangsöffnungen vorgesehen ist, welche an die Geometrie der Elemente angepasst sind, so dass diese vereinzelt in die einzelnen Durchgangsöffnungen eingesetzt werden können. Das Flächenelement kann aus demselben Material wie die Halterung und/oder die Aufnahme hergestellt werden. Gegebenenfalls kann das Flächenelement ein Teil der Aufnahme bilden.

Dieses Flächenelement dient insbesondere dazu, die Elemente in einer exakten Geometrie innerhalb der Halterung aufzunehmen und zu fixieren, so dass in dem späteren Bestrahlungsvorgang reproduzierbar vorgegebene Bestrahlungsgeometrien resultieren.

Wie bereits zuvor ausgeführt, stellt Kartonage, insbesondere auch Wellpappe, einen geeigneten Werkstoff für die Herstellung von Bestandteilen der Verpackungseinheit, insbesondere die Halterung, die Aufnahme für die Halterung sowie gegebenenfalls auch einen Zwischenboden als Positionierhilfe für die Elemente, dar. Alternative Materialien sind gegebenenfalls expandierte oder geschäumte Kunststoff-Materialien, insbesondere Polyethylen (PE), Polyaryletherketone, Polypropylen (PP), Polyvinylchlorid (PVC), Melaminharz und Polyurethan (PU).

Die Wärme isolierenden Kunststoff-Materialien können auch in vernetzter Form vorliegen.

Bevorzugt wird der Rahmen der Aufnahme so dimensioniert, dass deren Bodenfläche so begrenzt wird, dass eine formschlüssige Aufnahme für die Halterung gebildet wird.

Damit ist sichergestellt, dass die Halterung in einer exakt vorgebbaren Geometrie in der Aufnahme aufgenommen wird und so auch im Rahmen der Handhabung der Verpackungseinheit bei der Bestrahlung definierte Bestrahlungsbedingungen herrschen.

Der Rahmen der Aufnahme wird vorzugsweise so ausgelegt, dass die davon definierte Ausnehmung eine Tiefe aufweist, welche im Wesentlichen der Höhe der Halterung mit darauf platzierten Elementen entspricht.

Damit ist von dem Rahmen eine isolierende Wand rings um die Elemente gebildet.

Auch die Aufnahme wird vorzugsweise unter Verwendung von Kartonagen-Material hergestellt.

Die zur Bildung der Verpackungseinheit verwendeten Materialien weisen vorzugsweise eine Temperaturstabilität auch bei Temperaturen von ca. 125 °C oder mehr, weiter bevorzugt von ca. 160 °C oder mehr, auf.

Wie bereits erwähnt, sind bevorzugte Verpackungseinheiten mit einem Deckel verschließbar, wobei erneut der Deckel bevorzugt aus einem Wärme schlecht leitenden und/oder strahlendurchlässigen Material gebildet ist, so dass der Deckel gegebenenfalls auch während des Bestrahlungsvorganges als solchem auf der Verpackungseinheit verbleiben kann.

Gemäß einem weiteren Aspekt der Erfindung sind alle Bestandteile der Verpackungseinheit neben den Elementen aus einem strahlenvernetzbaren Kunststoff-Material aus einem Wärme schlecht leitenden und damit Wärme isolierenden Material hergestellt.

Diese und weitere Vorteile der Erfindung werden im Einzelnen im Folgenden anhand der Zeichnung und am Beispiel von Implantat-Rohlingen als Elemente noch näher erläutert.

Es zeigen im Einzelnen:
- Figur 1: eine Halterung mit einer Mehrzahl von Implantat-Rohlingen;
- Figur 2: eine Aufnahme für eine Halterung mit Implantat-Rohlingen;
- Figur 3: ein Ablaufdiagramm zur Veranschaulichung der Aufnahme einer Halterung gemäß Figur 1 durch einen Aufnahmerahmen gemäß Figur 2; und
- Figur 4: eine erfindungsgemäße Verpackungseinheit mit einer Positionierhilfe für die Implantat-Rohlinge und einem Deckel.

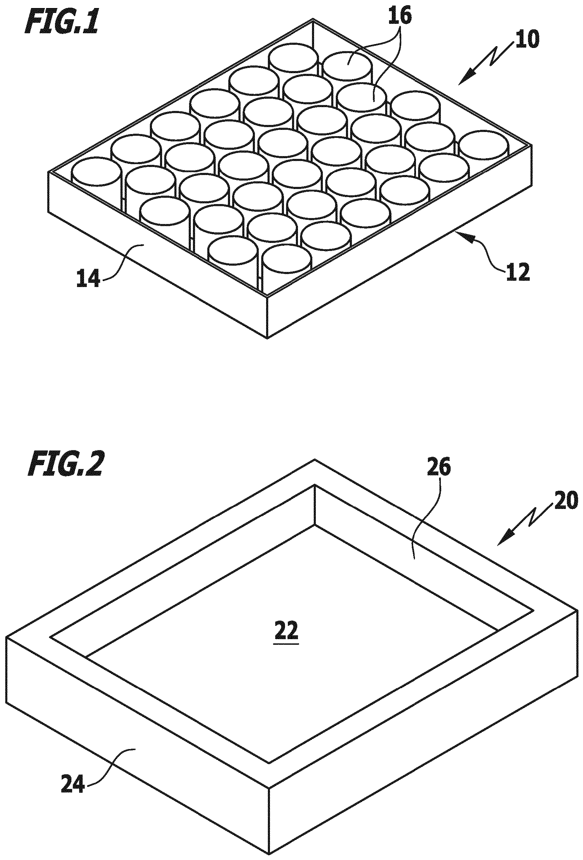

Figur 1 zeigt eine insgesamt mit dem Bezugszeichen 10 bezeichnete Halterung mit einer Bodenfläche 12 und einem am Außenumfang der Bodenfläche 12 umlaufenden Rand 14. Innerhalb des von dem am Außenumfang der Bodenfläche 12 umlaufenden Rand definierten Volumens ist eine Mehrzahl an zylindrischen Implantat-Rohlingen 16 angeordnet. Falls gewünscht, können die Implantat-Rohlinge dicht gepackt in der Halterung 10 angeordnet werden.

Eine Halterung 10, versehen mit Implantat-Rohlingen 16, wie in Figur 1 gezeigt, zeigt den Zustand der Rohlinge nach der Produktion in einem transportfähigen Zustand.

Für das erfindungsgemäße Verfahren zur Strahlenvernetzung der Implantat-Rohlinge ist vorgesehen, dass eine Verpackungseinheit gebildet wird, die neben der Halterung 10 für die Rohlinge 16 eine Aufnahme 20 beinhaltet, wie sie in Figur 2 dargestellt ist. Alternativ kann die Aufnahme 20 selbst die Funktion der Halterung 10 übernehmen.

Die Aufnahme 20 weist eine Bodenfläche 22 sowie einen um die Bodenfläche 22 rings umlaufenden Rahmen 24 auf, dessen Höhe vorzugsweise so gewählt ist, dass er der Höhe des Randes 14 der Halterung 10 entspricht. Zumindest die Aufnahme 20, bevorzugt auch die Halterung 10, ist aus einem Wärme schlecht leitenden Material gebildet, insbesondere aus Karton, Dämm-Materialien wie z.B. Polypropylen (PP), Polyethylen (PE), Melaninharz und Polyurethan (PU), gegebenenfalls expandiert oder geschäumt.

Durch den rings umlaufenden Rahmen 24 der Aufnahme 20 wird eine Ausnehmung 26 geschaffen, in die passgenau die Halterung 10 mit den Implantat-Rohlingen 16 eingesetzt werden kann. Der Rahmen 24 wird entsprechend den Vorgaben für die wärmeisolierende Wirkung dimensioniert.

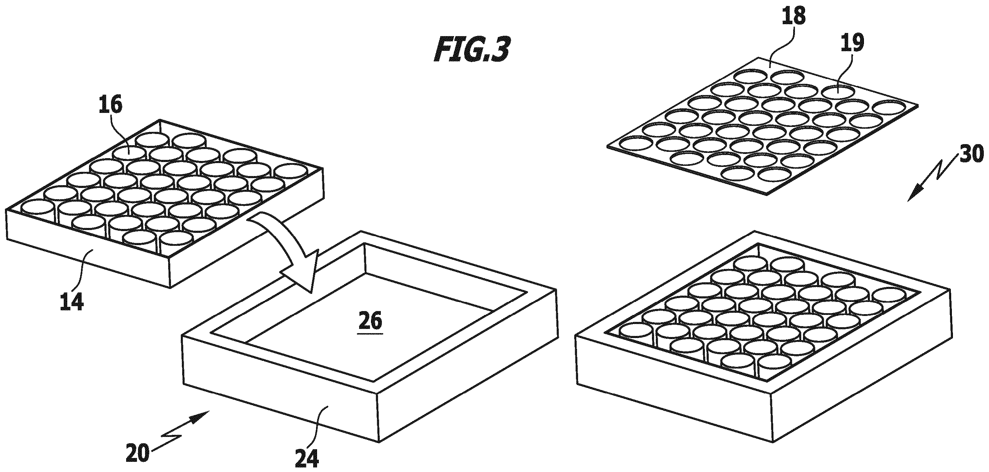

Der Vorgang des Einsetzens ist in Figur 3 veranschaulicht. Am Ende resultiert eine Verpackungseinheit, die in der Figur 3 mit dem Bezugszeichen 30 versehen ist.

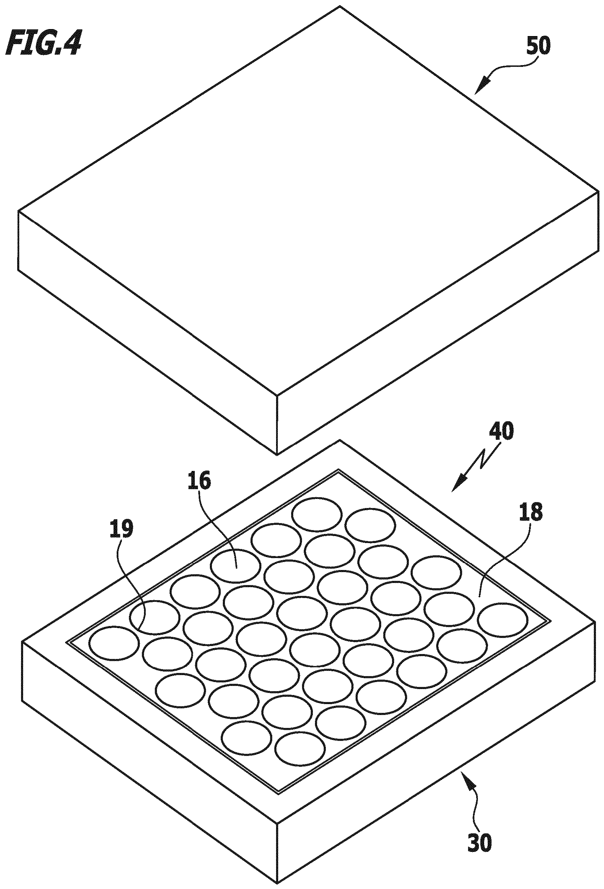

Bei der erfindungsgemäßen Verpackungseinheit kann vorgesehen sein, dass - wie in Figur 3 angedeutet und in Figur 4 anhand einer Verpackungseinheit 40 dargestellt - die Halterung 10 durch einen Zwischenboden 18 als Positionierhilfe ergänzt ist, welcher eine Vielzahl von Durchgangsöffnungen 19 aufweist, die an den Durchmesser der zylindrischen Implantat-Rohlinge 16 angepasst sind. Das Flächenelement oder der Zwischenboden 18 wird im Wesentlichen parallel und beabstandet zur Bodenfläche 12 der Halterung 10 angeordnet und gegebenenfalls dort mittels Stützelementen (nicht gezeigt) abgestützt.

Durch das Flächenelement 18 werden die Implantat-Rohlinge 16 innerhalb der Halterung 10 exakt positioniert und in dieser Position gehalten, so dass jeweils definierte Verhältnisse vorliegen, die insbesondere einer gleichmäßigen Vernetzung der Kunststoff-Materialien der Implantat-Rohlinge bei der Bestrahlungsbehandlung dienen, beispielsweise UHMWPE.

Schließlich kann die Verpackungseinheit 30 oder 40 noch mit einem Deckel 50 verschlossen werden, wodurch sich die Temperatur der Implantat-Rohlinge nach dem Erwärmen weiter und länger stabilisieren lässt.

Die hier beispielsweise verwendeten UHMWPE-Materialien weisen einen Schmelztemperaturbereich von ca. 125 °C bis ca. 140 °C auf. Nachdem die Halterung 10 mit den Implantat-Rohlingen 16 zur Strahlenvernetzung angeliefert worden sind, wird die Halterung 10 in eine Aufnahme 20 eingesetzt, gegebenenfalls noch mit einem Deckel 50 verschlossen.

Die so konfektionierte Verpackungseinheit 30 bzw. 40 wird dann in einem Ofen in einem Zeitraum von ca. 600 min auf eine vorgegebene Temperatur von ca. 120 °C erwärmt.

Danach lässt sich aufgrund der isolierenden Wirkung der Verpackungseinheit die Handhabung einschließlich Transport der Verpackungseinheit bis zur Bestrahlungsvorrichtung in ca. 20 bis ca. 30 min abwickeln, ohne dass die Temperatur der Implantat-Rohlinge unter die bevorzugte Mindesttemperatur für die Strahlenvernetzung von ca. 100 °C absinkt.

Die Implantat-Rohlinge werden dann in die Bestrahlungsvorrichtung eingeführt und dort beispielsweise mit einer β-Strahlung behandelt. Der Deckel 50, soweit vorhanden, kann hierbei auf der Verpackungseinheit 40 verbleiben, wobei dieser vorzugsweise aus einem thermisch isolierenden, strahlendurchlässigen Material hergestellt ist. Im Einzelnen kommen für die Herstellung des Deckels vorzugsweise Materialien in Frage, die im Zusammenhang mit der Halterung 10 bzw. der Aufnahme 20 genannt wurden.

Nach der Strahlenvernetzung können die vernetzten Implantat-Rohlinge in der Halterung verbleiben, mit dieser aus der Aufnahme entnommen und so platzsparend zu dem Fertigungsort transportiert werden, an dem die eigentlichen Implantate hergestellt werden.

Es versteht sich, dass das erfindungsgemäße Verfahren in gleicher Weise für andere Elemente als die Implantat-Rohlinge verwendbar ist, insbesondere auch fertige Implantate, chirurgische Instrumente und Instrumententeile, die einer Strahlenvernetzung unterworfen werden können.

## Patentansprüche

1. Verfahren zur Strahlenvernetzung von Elementen aus einem strahlenvernetzbaren Kunststoff-Material, die ausgewählt sind aus Implantaten, Implantat-Rohlingen, chirurgischen Instrumenten und deren Teilen, umfassend
Platzieren eines oder mehrerer Elemente (16) in einer Verpackungseinheit (30; 40) mit einer Aufnahme für das eine oder die mehreren Elemente,
Erwärmen der in der Verpackungseinheit enthaltenen Elemente auf eine Temperatur, welche gleich oder höher als eine vorgegebene Vernetzungstemperatur ist;
Einführen der erwärmten Elemente in der Verpackungseinheit in eine Bestrahlungsvorrichtung zur Strahlenvernetzung des Kunststoff-Materials; und
Entnahme der Verpackungseinheit mit den Elementen nach erfolgter Strahlenvernetzung aus der Bestrahlungsvorrichtung,
**dadurch gekennzeichnet, dass** die Aufnahme (20) aus einem Wärme schlecht leitenden Material hergestellt ist.

2. Verfahren nach Anspruch 1, **dadurch gekennzeichnet, dass** die Elemente (16) derart in der Aufnahme (20) der Verpackungseinheit (30; 40) platziert werden, dass diese mindestens bodenseitig und seitlich im Wesentlichen vollständig von der Verpackungseinheit umgeben sind.

3. Verfahren nach Anspruch 1 oder 2, **dadurch gekennzeichnet, dass** die Verpackungseinheit (30; 40) vor dem Einführen in die Bestrahlungsvorrichtung, insbesondere unmittelbar nach oder weiter bevorzugt bereits vor dem Erwärmen, mit einem Deckel verschlossen wird, wobei der Deckel (50) bevorzugt aus einem Wärme schlecht leitenden Material hergestellt ist.

4. Verfahren nach einem der Ansprüche 1 bis 3, **dadurch gekennzeichnet, dass** eine Mehrzahl von Elementen (16) in einer gemeinsamen Halterung (10) bereitgestellt wird und dass die Halterung mit den Elementen in der Aufnahme (20) der Verpackungseinheit (30; 40) platziert wird.

5. Verfahren nach einem der Ansprüche 1 bis 4, **dadurch gekennzeichnet, dass** die Elemente (16) in der Verpackungseinheit (40) auf eine Temperatur erwärmt werden, die niedriger als die Schmelztemperatur bzw. der untere Grenzwert des Schmelztemperaturbereichs des Kunststoff-Materials ist.

6. Verfahren nach einem der Ansprüche 1 bis 5, **dadurch gekennzeichnet, dass** die Elemente (16) in der Verpackungseinheit (40) auf eine Temperatur erwärmt werden, bei der eine Maßhaltigkeit von 2 % gewährleistet ist.

7. Verfahren nach einem der Ansprüche 1 bis 6, **dadurch gekennzeichnet, dass** die Elemente (16) auf eine Temperatur von ca. 60 °C bis ca. 160 °C, insbesondere ca. 90 °C bis ca. 125 °C, erwärmt werden.

8. Verfahren nach einem der Ansprüche 1 bis 7, **dadurch gekennzeichnet, dass** die Verpackungseinheit (40) mit den Elementen (16) innerhalb von ca. 10 min oder weniger, insbesondere 5 min oder weniger, nach Beendigung des Erwärmens in die Bestrahlungsvorrichtung eingeführt wird, oder
dass die Verpackungseinheit mit den Elementen in die Bestrahlungsvorrichtung eingeführt wird, solange die Temperatur der Elemente noch eine Vernetzungstemperatur von ca. 60 °C bis ca. 160 °C, insbesondere ca. 90 °C bis ca. 125 °C, aufweisen.

9. Verpackungseinheit (40) mit einem oder mehreren Elementen (16) aus einem strahlungsvernetzbaren Kunststoff-Material, die ausgewählt sind aus Implantaten, Implantat-Rohlingen, chirurgischen Instrumenten und deren Teilen, insbesondere zur Verwendung in einem Verfahren gemäß einem der Ansprüche 1 bis 8, wobei die Verpackungseinheit eine Aufnahme (20) für die Elemente umfasst, eine Bodenfläche (22) und einen die Bodenfläche begrenzenden Rahmen (24) umfasst und eine Ausnehmung (26) für die Platzierung der Elemente definiert, **dadurch gekennzeichnet, dass** die Aufnahme (20) aus einem Wärme schlecht leitenden Material hergestellt ist.

10. Verpackungseinheit (30; 40) nach Anspruch 9, **dadurch gekennzeichnet, dass** die Verpackungseinheit eine Halterung (10) für eine Mehrzahl an Elementen (16) umfasst, die in der Aufnahme (20) platzierbar ist, wobei optional
die Halterung eine Grundfläche (12) aufweist, welche von einem Rand (14) umgeben ist, der eine Stellfläche für die Elemente in der Halterung begrenzt, und/oder
die Höhe des Rahmens (24) und/oder Randes im Wesentlichen der Höhe der Elemente entspricht, und/oder
die Aufnahme oder die Halterung eine Positionierhilfe (18) für die Elemente umfasst, wobei die Positionierhilfe vorzugsweise als parallel zur Bodenfläche angeordnetes Flächenelement ausgestaltet ist, welches Durchgangsöffnungen (19) aufweist, in denen die Elemente vereinzelt einsetzbar sind, wobei die Positionierhilfe weiter bevorzugt eine positionsgenaue Platzierung und/oder vorgegebene Orientierung der Elemente in der Verpackungseinheit sichert.

11. Verpackungseinheit (30; 40) nach einem der Ansprüche 9 oder 10, **dadurch gekennzeichnet, dass** die Aufnahme (20) und/oder die Halterung (10) unter Verwendung von Karton oder gegebenenfalls expandierten oder geschäumten Dämm-Materialien, insbesondere Polypropylen, Polyethylen, Melaminharz oder Polyurethan, hergestellt sind.

12. Verpackungseinheit (30; 40) nach einem der Ansprüche 9 bis 11, **dadurch gekennzeichnet, dass** der Rahmen (24) der Aufnahme (20) die Bodenfläche (22) derart begrenzt, dass eine formschlüssige Aufnahme der Halterung (10) resultiert.

13. Verpackungseinheit (30; 40) nach einem der Ansprüche 9 bis 12, **dadurch gekennzeichnet, dass** die von dem Rahmen (24) definierte Ausnehmung (26) eine Tiefe aufweist, die im Wesentlichen der Höhe der Halterung (10) mit darauf platzierten Elementen (16) entspricht.

14. Verpackungseinheit (30; 40) nach einem der Ansprüche 9 bis 13, **dadurch gekennzeichnet, dass** die Aufnahme (20) und gegebenenfalls die Halterung (10) aus einem Material hergestellt sind, welches für energiereiche Strahlung zur Vernetzung des Kunststoff-Materials der Elemente (16) durchlässig ist, wobei bevorzugt das Material, aus dem die Aufnahme und die Halterung hergestellt sind, für β- und γ-Strahlung durchlässig ist.

15. Verpackungseinheit (30; 40) nach einem der Ansprüche 9 bis 14, **dadurch gekennzeichnet, dass** die Aufnahme (20) und gegebenenfalls die Halterung (10) Wärme isolierend ausgebildet sind, und/oder
dass die Materialien der Verpackungseinheit aus einem temperaturstabilen Material gefertigt sind, welches bis zu Temperaturen von ca. 125 °C, insbesondere ca. 160 °C, oder mehr belastbar ist, und/oder
dass die Verpackungseinheit einen Deckel (50), insbesondere aus einem Wärme schlecht leitenden Material, aufweist.

## Claims

1. Method for radiation cross-linking elements made of a radiation cross-linkable plastic material, which are elected from implants, implant blanks, surgical instruments, and parts thereof, said method comprising placing one or more elements (16) in a packaging unit (30; 40) with a receptacle for the one or more elements;
heating the elements contained in the packaging unit to a temperature that is equal to or higher than a predetermined cross-linking temperature;
introducing the heated elements in the packaging unit into an irradiating apparatus for radiation cross-linking the plastic material; and
removing the packaging unit with the elements from the irradiating apparatus after completed radiation cross-linking,
**characterized in that** the receptacle (20) is made of a material that is a poor conductor of heat.

2. Method in accordance with Claim 1, **characterized in that** the elements (16) are placed in the receptacle (20) of the packaging unit (30; 40) in such a way that they are substantially completely surrounded by the packaging unit at least on the base side and laterally.

3. Method in accordance with Claim 1 or 2, **characterized in that** the packaging unit (30; 40) is closed with a lid before the introduction into the irradiating apparatus, in particular directly after or further preferably before the heating, wherein the lid (50) is preferably made of a material that is a poor conductor of heat.

4. Method in accordance with any one of Claims 1 to 3, **characterized in that** a plurality of elements (16) are provided in a common holder (10) and **in that** the holder is placed with the elements in the receptacle (20) of the packaging unit (30; 40).

5. Method in accordance with any one of Claims 1 to 4, **characterized in that** the elements (16) in the packaging unit (40) are heated to a temperature that is lower than the melting temperature or the lower limit value of the melting temperature range of the plastic material.

6. Method in accordance with any one of Claims 1 to 5, **characterized in that** the elements (16) in the packaging unit (40) are heated to a temperature at which a dimensional stability of 2% is ensured.

7. Method in accordance with any one of Claims 1 to 6, **characterized in that** the elements (16) are heated to a temperature of about 60 °C to about 160 °C, in particular about 90 °C to about 125 °C.

8. Method in accordance with any one of Claims 1 to 7, **characterized in that** the packaging unit (40) is introduced with the elements (16) into the irradiating apparatus within about 10 min or less, in particular 5 min or less, after completion of the heating, or
**in that** the packaging unit is introduced with the elements into the irradiating apparatus as long as the temperature of the elements still has a cross-linking temperature of about 60 °C to about 160 °C, in particular about 90 °C to about 125 °C.

9. Packaging unit (40) with one or more elements (16) made of a radiation cross-linkable plastic material, which are selected from implants, implant blanks, surgical instruments, and parts thereof, in particular for use in a method in accordance with any one of Claims 1 to 8, wherein the packaging unit comprises a receptacle (20) for the elements, comprises a base surface (22) and a frame (24) delimiting the base surface, and defines a recess (26) for the placement of the elements, **characterized in that** the receptacle (20) is made of a material that is a poor conductor of heat.

10. Packaging unit (30; 40) in accordance with Claim 9, **characterized in that** the packaging unit comprises a holder (10) for a plurality of elements (16), said holder being placeable in the receptacle (20), wherein optionally
the holder has a base surface (12), which is surrounded by a rim (14) that delimits a placement surface for the elements in the holder, and/or
the height of the frame (24) and/or rim corresponds substantially to the height of the elements, and/or
the receptacle or the holder comprises a positioning aid (18) for the elements, wherein the positioning aid is preferably configured as a surface element arranged in parallel to the base surface, which has through-openings (19) into which the elements are individually insertable, wherein the positioning aid further preferably ensures a positionally accurate placement and/or predetermined orientation of the elements in the packaging unit.

11. Packaging unit (30; 40) in accordance with either of Claims 9 or 10, **characterized in that** the receptacle (20) and/or the holder (10) are produced using cardboard or optionally expanded or foamed insulating materials, in particular polypropylene, polyethylene, melamine resin, or polyurethane.

12. Packaging unit (30; 40) in accordance with any one of Claims 9 to 11, **characterized in that** the frame (24) of the receptacle (20) delimits the base surface (22) in such a way that it results in the holder (10) being accommodated in a positive-locking manner.

13. Packaging unit (30; 40) in accordance with any one of Claims 9 to 12, **characterized in that** the recess (26) defined by the frame (24) has a depth that corresponds substantially to the height of the holder (10) with elements (16) placed thereon.

14. Packaging unit (30; 40) in accordance with any one of Claims 9 to 13, **characterized in that** the receptacle (20) and optionally the holder (10) are made of a material that is permeable to high-energy radiation for cross-linking the plastic material of the elements (16), wherein the material from which the receptacle and the holder are made is permeable to β- and γ-radiation.

15. Packaging unit (30; 40) in accordance with any one of Claims 9 to 14, **characterized in that** the receptacle (20) and optionally the holder (10) is/are of heat-insulating configuration, and/or
**in that** the materials of the packaging unit are made of a temperature-stable material, which is resistant up to temperatures of about 125 °C, in particular about 160 °C, or more, and/or
**in that** the packaging unit has a lid (50), in particular made of a material that is a poor conductor of heat.

## Revendications

1. Procédé de réticulation par irradiation d'éléments dans un matériau plastique pouvant être réticulé par irradiation qui sont sélectionnés parmi des implants, des ébauches d'implant, des instruments chirurgicaux et leurs pièces, comprenant
le placement d'un ou plusieurs éléments (16) dans une unité d'emballage (30 ; 40) avec une réception pour les un ou plusieurs éléments,
le réchauffement des éléments contenus dans l'unité d'emballage à une température qui est supérieure ou égale à une température de réticulation prédéfinie ;
l'introduction des éléments réchauffés dans un dispositif d'irradiation dans l'unité d'emballage pour la réticulation par irradiation du matériau plastique ; et
le retrait de l'unité d'emballage avec les éléments hors du dispositif d'irradiation après achèvement de la réticulation par irradiation,
**caractérisé en ce que** la réception (20) est fabriquée dans un matériau mauvais conducteur de chaleur.

2. Procédé selon la revendication 1, **caractérisé en ce que** les éléments (16) sont placés dans la réception (20) de l'unité d'emballage (30 ; 40) de sorte que celle-ci soit entourée essentiellement entièrement par l'unité d'emballage, côté fond et latéralement.

3. Procédé selon la revendication 1 ou 2, **caractérisé en ce que** l'unité d'emballage (30 ; 40) est refermée par un couvercle avant l'introduction dans le dispositif d'irradiation, en particulier immédiatement après et davantage de préférence déjà avant le réchauffement, dans lequel le couvercle (50) est de préférence fabriqué dans un matériau mauvais conducteur de chaleur.

4. Procédé selon l'une des revendications 1 à 3, **caractérisé en ce qu'**une pluralité d'éléments (16) sont fournis dans un support (10) commun et **en ce que** le support avec les éléments est placé dans la réception (20) de l'unité d'emballage (30 ; 40).

5. Procédé selon l'une des revendications 1 à 4, **caractérisé en ce que** les éléments (16) dans l'unité d'emballage (40) sont réchauffés à une température qui est inférieure à la température de fusion ou à la valeur limite inférieure de la plage de température de fusion du matériau plastique.

6. Procédé selon l'une des revendications 1 à 5, **caractérisé en ce que** les éléments (16) dans l'unité d'emballage (40) sont réchauffés à une température à laquelle un respect des cotes de 2 % est garanti.

7. Procédé selon l'une des revendications 1 à 6, **caractérisé en ce que** les éléments (16) sont réchauffés à une température d'environ 60 °C à environ 160 °C, en particulier d'environ 90 °C à environ 125 °C.

8. Procédé selon l'une des revendications 1 à 7, **caractérisé en ce que** l'unité d'emballage (40) avec les éléments (16) est introduite dans le dispositif d'irradiation dans les environ 10 min ou moins, en particulier 5 min ou moins, qui suivent la cessation du réchauffement, ou
**en ce que** l'unité d'emballage avec les éléments est introduite dans le dispositif d'irradiation aussi longtemps que la température des éléments présentent encore une température de réticulation d'environ 60 °C à environ 160 °C, en particulier d'environ 90 °C à environ 125 °C.

9. Unité d'emballage (40) avec un ou plusieurs éléments (16) dans un matériau plastique pouvant être réticulé par irradiation qui sont sélectionnés parmi des implants, des ébauches d'implant, des instruments chirurgicaux et leurs pièces, en particulier pour une utilisation dans un procédé selon l'une des revendications 1 à 8, dans laquelle l'unité d'emballage comprend une réception (20) pour les éléments, une surface de fond (22) et un cadre (24) délimitant la surface de fond, et définit un évidement (26) pour le placement des éléments,
**caractérisée en ce que** la réception (20) est fabriquée dans un matériau mauvais conducteur de chaleur.

10. Unité d'emballage (30; 40) selon la revendication 9, **caractérisée en ce que** l'unité d'emballage comprend un support (10) pour une pluralité d'éléments (16) qui peut être placée dans la réception (20), dans laquelle optionnellement
le support présente une surface de base (12), laquelle est entourée par un bord (14) qui délimite une surface d'emplacement pour les éléments dans le support, et/ou
la hauteur du cadre (24) et/ou du bord correspond essentiellement à la hauteur des éléments, et/ou
la réception ou le support comprend une aide au positionnement (18) pour les éléments, dans laquelle l'aide au positionnement est de préférence configurée en tant qu'élément de surface agencé en parallèle de la surface de fond, lequel présente des ouvertures de passage (19) dans lesquelles les éléments peuvent être introduits individuellement, dans laquelle davantage de préférence l'aide au positionnement assure un placement à positionnement exact et/ou une orientation prédéfinie des éléments dans l'unité d'emballage.

11. Unité d'emballage (30 ; 40) selon l'une des revendications 9 ou 10, **caractérisée en ce que** la réception (20) et/ou le support (10) sont fabriqués en utilisant du carton ou le cas échéant des matériaux insonorisants expansés ou en mousse, en particulier des polypropylènes, des polyéthylènes, de la mélamine ou du polyuréthane.

12. Unité d'emballage (30 ; 40) selon l'une des revendications 9 à 11, **caractérisée en ce que** le cadre (24) de la réception (20) délimite la surface de fond (22) de sorte qu'en résulte une réception du support (10) par coopération de formes.

13. Unité d'emballage (30 ; 40) selon l'une des revendications 9 à 12, **caractérisée en ce que** l'évidement (26) défini par le cadre (24) présente une profondeur qui correspond essentiellement à la hauteur du support (10) avec des éléments (16) placés dessus.

14. Unité d'emballage (30 ; 40) selon l'une des revendications 9 à 13, **caractérisée en ce que** la réception (20) et le cas échéant le support (10) sont fabriqués dans un matériau qui est perméable à une irradiation à haute énergie pour la réticulation du matériau plastique des éléments (16), dans laquelle le matériau dans lequel la réception et le support sont fabriqués est de préférence perméable à un rayonnement β et γ.

15. Unité d'emballage (30 ; 40) selon l'une des revendications 9 à 14, **caractérisée en ce que** la réception (20) et le cas échéant le support (10) sont conçus de façon à isoler de la chaleur, et/ou
**en ce que** les matériaux de l'unité d'emballage sont façonnés à partir d'un matériau stable en température, lequel peut résister jusqu'à des températures d'environ 125 °C, en particulier d'environ 160 °C, ou davantage, et/ou
**en ce que** l'unité d'emballage présente un couvercle (50), en particulier dans un matériau mauvais conducteur de chaleur.
